# FASCICULE DE BREVET EUROPEEN

(11) **EP 2 118 805 B1**
(45) Date de publication et mention de la délivrance du brevet: **14.11.2012**
(21) Numéro de dépôt: 08761971.4
(22) Date de dépôt: 23.01.2008
(51) Int. Cl.: G06F 21/20

(54) **DISPOSITIF PORTABLE D'AUTHENTIFICATION**
TRAGBARE AUTHENTIFIZIERUNGSVORRICHTUNG
PORTABLE AUTHENTICATION DEVICE

(30) Priorité: 23.01.2007 FR 0752843
(43) Date de publication de la demande: 18.11.2009
(73) Titulaire: DIGIPAY GROUP, 1855 Luxembourg (LU)
(72) Inventeur: BLOT, Philippe, F-78370 Plaisir (FR); RENAUD, Jean-Charles, F-91350 Saint Cheron (FR); BUSCHINI, Philippe, F-75012 Paris (FR)
(74) Mandataire: Marconnet, Sébastien
(86) Numéro de dépôt international: PCT/FR2008/050104
(87) Numéro de publication internationale: WO 2008/107607

(56) Documents cités:
- EP-A1- 1 035 497
- EP-A1- 1 262 860
- WO-A-01/31840
- WO-A-2005/122055
- WO-A1-03/096287
- US-A- 5 657 388
- US-A1- 2001 054 148
- US-A1- 2005 182 971
- US-A1- 2006 083 228
- US-A1- 2006 107 312

## Description

La présente invention concerne un système comportant un serveur et un dispositif portable et polyvalent d'authentification, permettant à un utilisateur de s'authentifier, de manière sûre et rapide, au travers de tous les canaux de communication existants (téléphone, Internet...) ou directement sur un appareil (automate, ordinateur portable...), pour accéder à tous types de services et/ou de machines sécurisés.

Pour authentifier un utilisateur d'un service ou d'une machine, telle qu'un ordinateur personnel, il est connu d'utiliser un dispositif portable fournissant un mot de passe dynamique ou « one time password » (OTP), c'est-à-dire un mot de passe différent à chaque calcul. Ce mot de passe est généré via un algorithme par un processeur, l'algorithme étant basé sur une clé secrète unique et propre au dispositif. Dans un tel dispositif, la clé secrète est implémentée via l'algorithme de calcul dans une mémoire lors de la fabrication, ce qui impose la personnalisation du dispositif dès la fabrication pour le rendre fonctionnel, de la même manière que les cartes bancaires. Une telle contrainte pose notamment des problèmes de sécurité (notamment du fait du transport de dispositifs actifs depuis leur lieu de fabrication), et ne permet pas d'effectuer de mises à jour d'amélioration et/ou de personnalisation complémentaire du dispositif, les informations contenues étant figées en usine.

Il est connu du document US 2001/0054 148 de transformer un terminal de lecture de carte à puce par insertion d'une carte sécurisée en dispositif de génération de mots de passe à usage unique. Dans ce dispositif connu, les mots de passe sont générés sur la base d'une clé secrète embarquée dans la carte insérée.

Il est aussi connu du document WO 03/096287 de générer des mots de passe à usage unique en utilisant un registre incrémenté de façon monotone et d'une variable dynamique afin d'obtenir une sécurité augmentée. Le serveur d'authentification divulgué par ce document est en mesure de générer le même mot de passe à usage unique que son client même lorsque ce dernier a généré un mot de passe qui n'est pas arrivé au serveur. Pour se faire, il envoie une partie du registre utilisé pour permettre un serveur de détecter cette situation.

L'objet de l'invention est d'améliorer ces systèmes existants.

L'invention part de la constatation qu'il est avantageux de pouvoir implémenter la clé secrète, entre autres informations, le plus tard possible, et en tout état de cause après fabrication (par exemple au moment de la vente), de manière simple et réversible.

Ainsi, l'invention concerne un système selon la revendication 1.

Ainsi, grâce au système selon l'invention, l'utilisateur peut s'authentifier de manière sûre et rapide en fournissant à un prestataire de service et/ou à un appareil un mot de passe dynamique, c'est-à-dire différent à chaque nouvelle authentification. Le stockage de la clé secrète servant au calcul du mot de passe dynamique dans une mémoire portée par un circuit électronique amovible permet que le dispositif ne fonctionne que si ladite mémoire est correctement connectée au dispositif. L'utilisation d'une mémoire amovible procure de nombreux avantages : la personnalisation du système est simplifiée car celui-ci est fabriqué en grande série et personnalisé au dernier moment, par exemple lors de la vente, par adjonction de la mémoire contenant la clé secrète. De plus, un tel système offre des possibilités de personnalisation très large, notamment le choix d'activer ou non certaines fonctions. On peut également implémenter des informations complémentaires dans la mémoire et effectuer leur mise à jour. On peut ainsi faire évoluer les capacités et les fonctionnalités du système sans avoir à le remplacer.

La sécurité s'en trouve également renforcée car on peut fournir à l'utilisateur les deux éléments par deux canaux distincts, ce dernier effectuant lui-même l'insertion de la mémoire contenant la clé secrète.

Dans une réalisation, la mémoire est portée par un circuit électronique, de type carte SIM ou UICC, le dispositif comprenant un connecteur pour accueillir le circuit électronique.

Dans une réalisation, le microprocesseur est porté par le même circuit électronique que la mémoire dans laquelle est stockée la clé secrète.

Dans une réalisation, le dispositif comprend un module d'émission radiofréquences pour émettre un signal radiofréquences représentatif du mot de passe dynamique.

Dans une réalisation, le dispositif comprend une connectique de type USB et peut être connecté sur un appareil équipé d'un port de type USB.

Dans une réalisation, le dispositif comprend une batterie rechargeable, la batterie étant rechargée lorsque le dispositif est connecté via le port USB.

Dans une réalisation, la mémoire dans laquelle est stockée la clé secrète permet de stocker des informations complémentaires.

Dans une réalisation, le mot de passe dynamique est simultanément fourni par le dispositif via au moins deux des moyens de communication disponibles.

Un exemple de réalisation de l'invention est décrit de manière non limitative en relation avec les figures parmi lesquelles :
- la figure 1 est un schéma en trois dimensions d'un dispositif selon l'invention,
- la figure 2 montre le dispositif de la figure 1, vu sous un angle différent,
- la figure 3 montre des composants d'un dispositif selon l'invention,
- la figure 4 montre les composants d'une variante du dispositif de la figure 3.

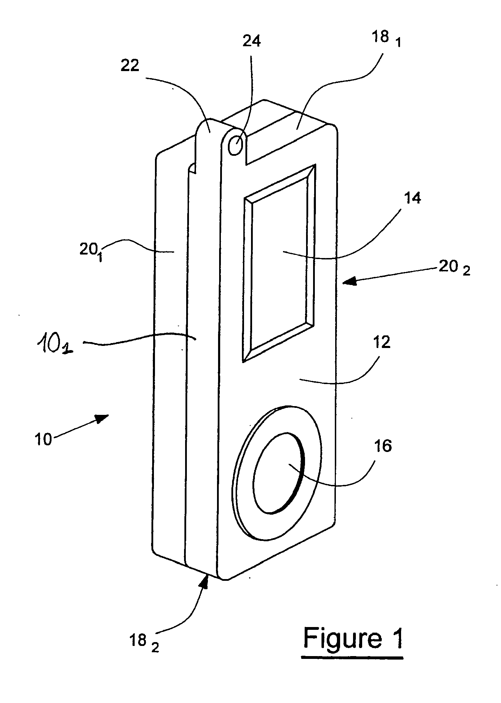

La figure 1 montre un dispositif 10 selon l'invention. Un tel dispositif 10 est un objet portable de dimensions réduites, formé par un boîtier unique et compact 10₁, dans l'exemple de forme sensiblement parallélépipédique. Sur une face 12 du boîtier 10₁, dite face avant, est disposé un afficheur 14, permettant l'affichage d'une séquence de caractères ou de chiffres, dans l'exemple une séquence comprise entre six et huit caractères. Sur cette face avant 12 de l'objet portable 10 est également disposée une touche 16 constituant un moyen d'activation de l'objet portable 10. En variante, la touche 16 est remplacée par un capteur biométrique, ou par tout autre capteur apte à constituer un moyen d'activation. Le contour de la face avant 12 de l'objet portable est sensiblement rectangulaire, et l'objet 10 présente donc quatre faces latérales opposées deux à deux, deux petites faces latérales 18₁ et 18₂, et deux grandes faces latérales 20₁ et 20₂. Un élément 22 en saillie sur l'une des petites faces latérales du dispositif 18₁ comporte un trou 24 permettant d'attacher le dispositif 10, par exemple à un porte-clés.

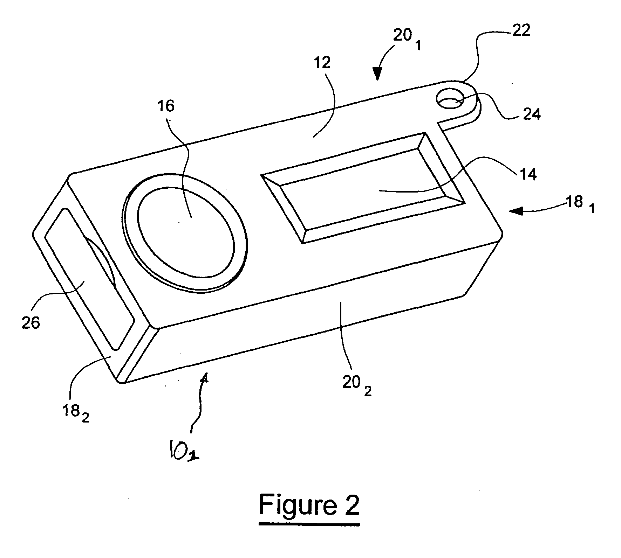

La figure 2 montre le dispositif 10 vu sous un autre angle. On peut voir sur petite face latérale 18₂, opposée à la petite face latérale 18₁ comprenant l'élément 21, une ouverture, ou fente 26 permettant l'insertion à l'intérieur du dispositif 10 d'un circuit électronique, ou puce, par exemple de type « carte SIM ».

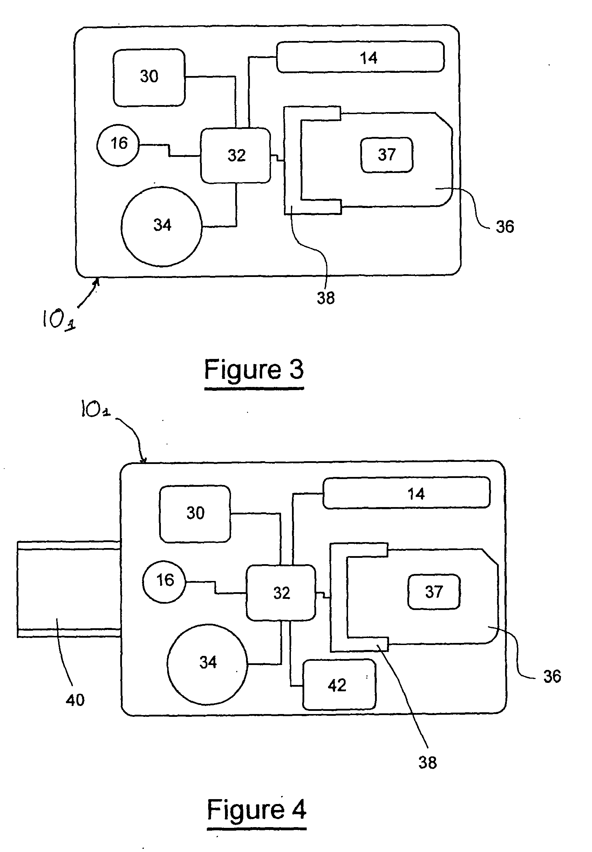

La figure 3 montre les composants disposés dans l'objet portable 10. Celui-ci comprend une batterie 30 pour alimenter les différents composants. Un module d'émission sonore 34, ou « buzzer » est intégré à l'objet portable. Il s'agit d'un haut-parleur de type piézoélectrique. Un microprocesseur 32 permet d'effectuer des opérations variées, parmi lesquelles le calcul d'un mot de passe dynamique, ou OTP. Le microprocesseur 32 effectue le calcul de l'OTP grâce à un algorithme basé sur une clé secrète et unique. Cette clé secrète est stockée dans une mémoire 37, connectée de manière amovible à l'objet 10, via un connecteur 38. Dans l'exemple, la mémoire 37 est portée par un circuit électronique 36 de type carte à puce, contenant un microcontrôleur et une mémoire de stockage, comme par exemple une carte de type carte SIM ou UICC (« Universal Integrated Circuit Card », carte universelle à circuit intégré). Conformément à l'invention, celle-ci est introduite dans la fente 26 et connectée au connecteur 38.

Il est avantageux d'utiliser une telle carte, car outre une mémoire de stockage, les capacités de calcul qu'elle procure permettent d'envisager d'y implémenter tout ou partie de l'algorithme de calcul du mot de passe dynamique, ainsi que des fonctions supplémentaires. Dans une variante, le microprocesseur 32 est intégré dans cette carte, et toutes les opérations de calcul effectuées par le dispositif 10 sont réalisées par la carte 36. Le dispositif peut dans ce cas comprendre un microprocesseur (non représenté) dédié à la gestion des éléments tel que l'afficheur, le module d'émission sonore...

D'autre part, l'utilisation d'une carte de type SIM ou UICC permet d'obtenir un dispositif très compact. En effet, les dimensions d'une telle carte sont très réduites en comparaison avec une carte à puce classique au format type « carte de crédit ». Ainsi, grâce à cette taille très réduite, la carte peut être insérée intégralement et laissée à demeure dans le boîtier 10₁ (tout en restant amovible). On obtient ainsi un dispositif autonome, intégrant tous les éléments nécessaires à son fonctionnement, tout en présentant un format « de poche » comparable aux dispositifs de stockage USB (couramment appelés « clés USB »).

La carte SIM 36 peut être introduite lors de la fabrication ou à n'importe quel moment après celle-ci, notamment lors de la remise du dispositif à son utilisateur. Le dispositif n'est pas fonctionnel tant que la carte 36 n'est pas connectée à celui-ci via le connecteur 38. La fente 26 pourra être scellée après introduction de la carte SIM 36 si l'on ne souhaite pas que l'utilisateur puisse la retirer lui-même. Dans ce cas, une variante ne prévoit pas de fente ou d'ouverture sur le boîtier 10₁ du dispositif. Ainsi, l'extraction de la carte 36 peut être rendue plus difficile (en rendant nécessaire le démontage du dispositif pour accéder à la carte), voire impossible (la carte est installée lors de la fabrication et le dispositif n'est pas démontable).

Chaque mot de passe dynamique calculé est destiné à être affiché sous la forme d'une séquence de caractères alphanumériques par l'afficheur 14 et/ou émis par le buzzer 34 sous forme de signaux sonores représentatifs de ce mot de passe dynamique. L'afficheur 14 et le buzzer 34 sont deux des moyens de communication de l'OTP dont peut disposer l'objet portable 10. De préférence, les signaux émis et affichés comprennent un identifiant propre au dispositif 10 ou à la carte 36, ainsi que l'OTP.

On décrit ci-après différentes variantes de calcul et de vérification de l'OTP. Dans toutes les variantes, le mot de passe est généré via un algorithme par le microprocesseur 32, et basé sur la clé secrète, qui est originale et unique. Cette même clé est par ailleurs stockée dans une base de données d'un serveur (non montré) chargé de l'authentification, pour permettre la vérification d'un OTP fourni par un utilisateur cherchant à s'authentifier.

Dans une première variante, l'OTP est calculé via un algorithme qui prend en argument la clé secrète stockée en mémoire d'une part, et un compteur incrémenté d'une unité à chaque nouveau calcul, donc à chaque appui sur la touche 16 d'autre part. L'incrémentation du compteur fournit ainsi une valeur variable qui permet que le résultat du calcul effectué par l'algorithme soit différent à chaque calcul : on obtient ainsi un mot de passe dynamique.

Lorsque l'OTP ainsi calculé est fourni à la machine/serveur chargé de l'authentification, par exemple chez un prestataire de services à distance, celui-ci est accompagné d'un identifiant propre au dispositif 10 (et donc propre à son possesseur). Grâce à l'identifiant, le serveur extrait d'une base de donnée interne la clé secrète unique associée à l'identifiant.

Le serveur ne connaissant pas la valeur du compteur incrémental utilisée pour le calcul de l'OTP, il recherche alors la dernière valeur connue de ce compteur, c'est-à-dire celle utilisée lors de la dernière authentification, cette valeur étant stockée dans le serveur. Bien entendu, depuis cette dernière authentification effective, le dispositif aura pu être sollicité un certain nombre de fois par l'utilisateur sans utiliser les OTP calculés. Pour tenir compte de cette éventuelle différence, le serveur reproduit successivement le même calcul que celui mis en oeuvre dans le dispositif, en partant de la dernière valeur connue du compteur incrémental augmentée d'une unité et en incrémentant celle-ci à chaque nouveau calcul, jusqu'à ce que le calcul donne un résultat identique à l'OTP qui a été fourni par l'utilisateur.

Par mesure de sécurité, le nombre d'itérations effectuées par le serveur sera limité, et si le serveur atteint le nombre maximum d'itérations sans avoir pu obtenir un résultat identique à l'OTP fourni, alors l'authentification est refusée. Lorsque l'OTP a été vérifié et accepté, la nouvelle valeur correcte du compteur incrémental est alors stockée dans le serveur pour servir lors de la prochaine tentative d'authentification.

Dans une deuxième variante, l'algorithme de calcul prend comme argument le compteur incrémental décrit ci-dessus et une clé dynamique variant avec le temps. On obtient cette clé dynamique grâce à un deuxième algorithme qui prend comme argument la clé secrète et une valeur T dépendant du temps. Pour obtenir une valeur T dépendant du temps de manière simple, on peut par exemple procéder de la manière suivante : on mesure le temps écoulé depuis une valeur de départ To correspondant au moment de la personnalisation du dispositif (i.e. l'introduction initiale de la carte 36), le dispositif comprenant dans ce but une horloge. La valeur T représente alors le temps écoulé depuis To, exprimé en unités de temps. L'unité de temps utilisée est variable et peut être choisie lors de la personnalisation du dispositif (par exemple 1, 2, 5 ou 10 minutes). Pour que l'OTP puisse être vérifié par la machine ou le serveur destinataire, il faut que le référentiel temps utilisé par le dispositif soit le même que la machine/serveur destinataire. Dans ce but, la valeur de départ To introduite en mémoire lors de la personnalisation est une valeur relative permettant de synchroniser le dispositif sur le référentiel temps de la machine/serveur destinataire de l'OTP.

Dans cette deuxième variante, la vérification de l'OTP par le serveur destinataire obéit au même principe que celui décrit plus haut, en intégrant le calcul de la clé dynamique à partir de la clé secrète et de la valeur T dont le serveur dispose également.

Le dispositif selon l'invention permet de réaliser l'authentification de son possesseur au travers de tous les canaux de communication existants (téléphone, Internet...) ou directement sur un appareil (automate, ordinateur portable...). On décrit ci-après différents exemples de procédures d'authentification réalisables avec dispositif selon l'invention, lorsqu'un utilisateur doit s'identifier, auprès d'un prestataire de services ou d'une machine.

Authentification via un réseau téléphonique : c'est l'OTP sous forme de signaux sonores qui est utilisé dans ce cas. L'utilisateur presse la touche 16, et l'objet portable 10 délivre un OTP sous forme de signaux acoustiques, l'utilisateur ayant préalablement positionné son dispositif 10 à proximité du microphone du téléphone. Les signaux acoustiques sont transmis à travers le réseau téléphonique vers un serveur du prestataire concerné. Ces signaux sont alors décodés, l'identifiant est reconnu, et l'OTP est vérifié. La transaction est alors acceptée ou refusée.

Authentification via le réseau Internet : l'utilisateur est ici amené à entrer son identifiant et son OTP. Il recopie donc l'OTP tel qu'affiché par l'afficheur 14. Son identifiant et son OTP sont entrés sur un clavier d'un ordinateur connecté à un site Internet du prestataire. L'OTP est alors vérifié par le serveur du prestataire.

Authentification sur un appareil : Sur un appareil tel qu'un ordinateur portable, l'utilisateur se voit demander un identifiant et un OTP, comme pour l'authentification via un réseau.

Dans tous les cas, le prestataire de services pourra adjoindre au dispositif un code secret, tel qu'un code PIN à quatre chiffres, que l'utilisateur devra fournir en plus de l'OTP et de son identifiant, afin de renforcer la sécurité de l'authentification.

Dans une variante non représentée, l'objet portable peut être connecté via un port de type USB (« Universal Serial Bus ») à un ordinateur ou tout autre appareil équipé d'un tel port. Le dispositif comprend dans ce but une prise 40 (figure 4) adaptée au port USB. Ainsi, le dispositif peut fournir l'OTP calculé directement via le port USB.

On distingue alors deux cas : soit le mot de passe dynamique est fourni sur activation du dispositif lors de l'appui sur la touche 16, soit celui-ci est fourni en réponse à une interrogation de la machine hôte, par exemple à la demande de l'application nécessitant l'authentification. Dans ce dernier cas, l'interrogation peut être réalisée à intervalles réguliers pour augmenter la sécurité de l'application. En variante, le dispositif peut également fournir sur interrogation de la machine hôte, en complément de l'OTP, un certificat électronique d'authentification (préalablement fourni par une autorité habilitée à fournir de tels certificats). Dans cette variante, le certificat est inscrit dans la mémoire 37, et ne peut être modifié ou effacé.

Dans le cas ou le dispositif est connecté via un port de type USB, la batterie 30 utilisée dans le dispositif 10 peut être de type rechargeable, celle-ci étant alors rechargée via le port USB.

Dans une autre variante non représentée, le dispositif 10 comprend également un module de communication radiofréquences 42, représenté à la figure 4, permettant de transmettre l'OTP calculé sans contact, par exemple selon les normes RFID ou NFC.

Avantageusement, le dispositif 10 comprendra tous les composants nécessaires à la mise en oeuvre des différentes variantes décrites ci-dessus, mais ces fonctionnalités seront activées ou non lors de la personnalisation du dispositif. Ainsi, le prestataire de services qui fournit un tel dispositif à un client/utilisateur pourra choisir, pour ses applications propres, les fonctionnalités qu'il désire mettre en oeuvre (par exemple prise en compte du temps dans le calcul de l'OTP ou non, utilisation des radiofréquences ou non, utilisation du buzzer ou non...).

## Revendications

1. Système comportant un serveur et un dispositif portable d'authentification d'un utilisateur, comprenant un boîtier (10₁) unique dans lequel sont logés :
- des moyens (16) d'activation du dispositif, telle qu'une touche devant être pressée par l'utilisateur ;
- un microprocesseur (32) effectuant un calcul lors de l'activation du dispositif (10), le calcul mettant en oeuvre un algorithme basé sur une clé secrète stockée dans une mémoire (37), et ayant pour résultat un mot de passe dynamique ;
- le dispositif (10) étant tel que la mémoire (37) dans laquelle est stockée la clé secrète est disposée à l'intérieur du boîtier (10₁) et connectée au dispositif de manière amovible,
- le dispositif (10) comportant en outre en combinaison un module d'émission sonore (34) pour fournir le mot de passe dynamique sous forme de signaux acoustiques et un afficheur (14) pour un affichage du mot de passe dynamique effectué simultanément à l'émission du mot de passe sous forme acoustique,
dans lequel le calcul du mot de passe dynamique prend en argument la valeur d'un compteur incrémenté à chaque nouveau calcul, et dépend du temps,
dans lequel, lorsque le mot de passe dynamique ainsi calculé est fourni au serveur chargé de l'authentification, celui-ci est accompagné d'un identifiant propre audit dispositif (10),
dans lequel, le serveur ne connaissant pas la valeur du compteur incrémental utilisée pour le calcul du mot de passe dynamique, il recherche alors la dernière valeur connue de ce compteur, c'est-à-dire celle utilisée lors de la dernière authentification, cette valeur étant stockée dans le serveur,
et dans lequel ledit serveur reproduit successivement le même calcul que celui mis en oeuvre dans ledit dispositif (10), en partant de la dernière valeur connue du compteur incrémental augmentée d'une unité et en incrémentant celle-ci à chaque nouveau calcul, jusqu'à ce que le calcul donne un résultat identique au mot de passe dynamique qui a été fourni par l'utilisateur.

2. Système selon la revendication 1, dans lequel la mémoire (37) est portée par une carte, cette carte étant positionnée intégralement dans le boîtier (10₁).

3. Système selon la revendication 1 ou 2, dans lequel la mémoire (37) est portée par un circuit électronique (36) de type carte SIM ou UICC, le dispositif comprenant un connecteur (38) pour accueillir le circuit électronique (36).

4. Système selon l'une des revendications 1 à 3, dans lequel dans lequel le microprocesseur (32) est porté par le même circuit électronique (36) que la mémoire (37) dans laquelle est stockée la clé secrète.

5. Système selon l'une des revendications 1 à 4, comprenant un module d'émission radiofréquences (42) pour émettre un signal radiofréquences représentatif du mot de passe dynamique.

6. Système selon l'une des revendications 1 à 5, comportant une connectique (40) de type USB et pouvant être connecté sur un appareil équipé d'un port de type USB.

7. Système selon la revendication 6, comprenant une batterie (30) rechargeable, la batterie étant rechargée lorsque le dispositif est connecté via le port USB.

8. Système selon l'une des revendications 1 à 7, dans laquelle la mémoire (37) dans laquelle est stockée la clé secrète permet de stocker des informations complémentaires.

## Claims

1. A system comprising a server and a portable device for authenticating a user, comprising a unique housing (10₁) in which the following are housed:
- a means (16) for activating the device, such as a key that must be pressed by the user;
- a microprocessor (32) performing a calculation when the device (10) is activated, this calculation implementing an algorithm based on a secret key stored in a memory (37) and producing a dynamic password;
- the device (10) being such that the memory (37) containing the secret key is placed inside the housing (10₁) and is connected to the device in a removable manner,
- the device (10) also comprising a combination of a sound transmission module (34) for providing the dynamic password in the form of acoustic signals and a display (14) for displaying the dynamic password, occurring simultaneously to the transmission of the password in acoustic form,
wherein the calculation of the dynamic password uses as an argument the value of a counter incremented with each new calculation and time-dependent,
wherein, when the dynamic password thus calculated is provided to the authentication server, it is accompanied by an identifier specific to said device (10),
wherein the server, which does not know the value of the incremental counter used to calculate the dynamic password, therefore searches for the last known value of this counter, i.e. that used for the last authentication attempt, with this value being stored on the server,
and wherein said server successively reproduces the same calculation as that implemented by said device (10), based on the last known value of the incremental counter increased by one unit and by incrementing this for each new calculation until the calculation provides a result that matches the dynamic password provided by the user.

2. A system according to claim 1, wherein the memory (37) is contained in a card, with this card being entirely positioned within the housing (10₁).

3. A system according to claim 1 or 2, wherein the memory (37) is contained in a SIM card or UICC electronic circuit (36), with the device comprising a connector (38) to accommodate the electronic circuit (36).

4. A system according to one of claims 1 to 3, wherein the microprocessor (32) is contained in the same electronic circuit (36) as the memory (37) in which the secret key is stored.

5. A system according to one of claims 1 to 4, comprising a radiofrequency transmission module (42) for transmitting a radiofrequency signal representative of the dynamic password.

6. A system according to one of claims 1 to 5, comprising a USB connector (40) and capable of being connected to a device equipped with a USB port.

7. A system according to claim 6, comprising a rechargeable battery (30), the battery being recharged when the device is connected via the USB port.

8. A system according to one of claims 1 to 7, wherein the memory (37) containing the secret key also allows for the storage of additional information.

## Patentansprüche

1. System umfassend einen Server und eine tragbare Authentifizierungsvorrichtung eines Benutzers, umfassend ein einziges Gehäuse (10₁), in dem folgendes untergebracht ist:
- Mittel (16) zur Aktivierung der Vorrichtung, wie ein Taster, der vom Benutzer gedrückt werden muss;
- ein Mikroprozessor (32), der bei der Aktivierung der Vorrichtung (10) eine Berechnung durchführt, wobei die Berechnung einen Algorithmus anwendet, der auf einem Geheimschlüssel beruht, der in einem Speicher (37) abgelegt ist, und mit einem dynamischen Passwort als Ergebnis;
- wobei die Vorrichtung (10) derart ausgeführt ist, dass der Speicher (37), in dem der Geheimschlüssel abgelegt ist, im Inneren des Gehäuses (10₁) angeordnet, und mit der Vorrichtung in trennbarer Form verbunden ist,
- und die Vorrichtung (10) darüber hinaus in Kombination ein Schallemissionsgerät (34) umfasst, um das dynamische Passwort in Form von akustischen Signalen auszugeben, und eine Anzeige (14) für eine Anzeige des dynamischen Passworts, die zugleich mit der Ausgabe des Passworts in akustischer Form erfolgt,
bei dem die Berechnung des dynamischen Passworts den Wert eines Zählers berücksichtigt, der bei jeder neuen Berechnung inkrementiert wird, und von der Zeit abhängt,
bei dem, wenn das so berechnete dynamische Passwort dem Server übergeben wird, der mit der Authentifizierung beauftragt ist, es von einer Benutzeridentifizierung begleitet wird, die der besagten Vorrichtung (10) eigen ist,
bei dem, da der Server den Wert des inkrementellen Zählers nicht kennt, der für die Berechnung des dynamischen Passworts verwendet wird, er somit den letzten bekannten Wert dieses Zählers sucht, das heißt jenen, der bei der letzten Authentifizierung benutzt worden ist, wobei dieser Zähler im Server abgelegt ist,
und bei dem der besagte Server nach und nach die besagte Berechnung nachvollzieht, wie sie in der besagten Vorrichtung (10) angewandt wird, indem er vom letzten bekannten Wert des inkrementellen Zählers, erhöht um ein Inkrement, ausgeht, und indem er diesen bei jeder neuen Berechnung inkrementiert, bis die Berechnung ein Ergebnis bringt, das dem dynamischen Passwort gleicht, das vom Benutzer eingebracht worden ist.

2. System nach Anspruch 1, in dem sich der Speicher (37) auf einer Karte befindet, und diese Karte voll und ganz im Gehäuse (10₁) angeordnet ist.

3. System nach Anspruch 1 oder 2, in dem sich der Speicher (37) auf einem elektronischen Schaltkreis (36) in der Art einer SIM oder UICC Karte befindet, wobei die Vorrichtung einen Slot (38) umfasst, um den elektronischen Schaltkreis (36) aufzunehmen.

4. System nach einem der Ansprüche 1 bis 3, in dem sich der Mikroprozessor (32) auf demselben elektronischen Schaltkreis (36) befindet, wie der Speicher (37), in dem der Geheimschlüssel abgelegt ist.

5. System nach einem der Ansprüche 1 bis 4, umfassend ein Modul zum Aussenden von Funkfrequenzen (42) zum Aussenden eines Funkfrequenzsignals, das repräsentativ für das dynamische Passwort ist.

6. System nach einem der Ansprüche 1 bis 5, umfassend eine Anschlusstechnik (40) vom Typ USB, die mit einem Gerät verbunden werden kann, das mit einem Port vom Typ USB ausgestattet ist.

7. System nach Anspruch 6, umfassend eine aufladbare Batterie (30), wobei die Batterie aufgeladen wird, wenn die Vorrichtung über den USB Port angeschlossen wird.

8. System nach einem der Ansprüche 1 bis 7, in dem im Speicher (37), in dem der Geheimschlüssel abgelegt ist, ergänzende Informationen abgelegt werden können.
